# EUROPEAN PATENT SPECIFICATION

(11) **EP 0 730 012 B1**
(45) Date of publication and mention of the grant of the patent: **16.06.1999**
(21) Application number: 96301323.0
(22) Date of filing: 27.02.1996
(51) Int. Cl.: C09D 5/03, C09D 133/06

(54) **Flexible, weatherable, acrylic coating powder**
Flexibles, bewitterbares Acrylbeschichtungspulver
Poudre acrylique pour revêtement flexible résistant aux intempéries

(30) Priority: 28.02.1995 US 396313; 25.01.1996 US 580111
(43) Date of publication of application: 04.09.1996
(73) Proprietor: MORTON INTERNATIONAL, INC., Chicago Illinois 60606-1596 (US)
(72) Inventor: Decker, Owen H., West Reading, Pennsylvania 19611 (US); Tarnoski, Charles P., Sinking Spring, Pennsylvania 19608 (US)
(74) Representative: Bankes, Stephen Charles Digby

(56) References cited:
- No relevant documents disclosed

## Description

The present invention is directed to acrylic coating powders and more particularly to acrylic coating powders which provide coatings having improved flexibility and weatherability.

It is known to use acid-functional acrylic resins (e.g., S.C. Johnson SCX™ 815, 817 and 819) cured with triglycidylisocyanurate (TGIC) or with hydroxyalkylamides as coating powder compositions. These coatings have many desirable properties such as: high hardness, good clarity, good chemical resistance, and excellent resistance to loss of gloss on outdoor exposure. A typical shortcoming of these coatings is low flexibility, and poor impact resistance.

"Hybrid" coatings have also been prepared in which the acrylic resin is blended with epoxyfunctional resins, especially those derived from epichlorohydrin and bisphenol A. These coatings have many desirable properties, including good flexibility and impact resistance. However, they lose gloss in less than 500 hours when exposed to simulated outdoor weathering.

Coatings prepared from epoxyfunctional acrylics, such as those from acrylic copolymers containing glycidyl methacrylate, are known to exhibit similar properties to those prepared from the acid-functional acrylics mentioned above. When cured, for example, with dodecanedioic acid, they are hard, clear, smooth, chemically resistant, and resistant to weather. They also exhibit the same drawback as the coatings from acid-functional acrylics, i.e. poor flexibility and poor impact resistance.

U.S. Patent No. 3,817,946 discloses that the flexibility of glycidyl methacrylate-modified acrylics can be improved if a part of the polycarboxylic acid curing agent is replaced with a semicrystalline acid-functional polyester. Such materials were found to have two shortcomings. First, the powder showed a tendency to sinter. Second, the improvement in impact resistance and flexibility was marginal.

It is a general object of the present invention to provide a coating powder composition having resistance to weathering, and at the same time, good flexibility and impact resistance.

In accordance with the present invention, coating powders comprise A) between 60 and 90 wt%, preferably at least 70 wt%, relative to total weight of A) plus B) plus C), of an acrylic polymer having a weight average molecular weight of between 1000 and 30,000, a carboxylic acid equivalent weight of from 300 to 1000, preferably at least 500, and a glass transition temperature of 45°C or above, preferably 60°C or above, plus B) between 5 and 30 wt%, preferably between 5 and 25 wt% relative to total weight of A) plus B) plus C) of an adduct prepared from i) between 20 and 50 wt%, relative to total weight of i) plus ii), of a polyepoxy compound or a poly(beta-hydroxyalkyl amide) and compound ii) between 50 and 80 wt%, relative to total weight of i) plus ii), of a carboxylic acid-functional polyester resin reactive with said curing agent i), and C) between 2 and 30 wt.%, preferably between 5 and 20 wt% relative to the total weight of A) plus B) plus C) of a curing agent reactive with carboxylic acid groups, such that the total of unreacted functional groups of adduct B, plus the functional groups of the curing agent C) is at a stoichiometric equivalent relative to said carboxylic acid functionality of said acrylic polymer A) of between 0.5 and 1.5. To provide flexibility, at least 90 wt% of the diols used to form the polyester ii) of adduct B) are linear aliphatic diols and at least 90 wt% of the dicarboxylic acids used to form the polyester ii) of adduct B) are linear aliphatic dicarboxylic acids.

Herein, unless otherwise stated, all amounts are expressed by weight and the term "phr" is a weight measurement which relates to the total amount of resin, including the acrylic resin A) plus curing agent/polyester resin adduct B) plus additional curative C).

The carboxylic acid functional acrylic resins A) useful in the invention are formed from typical acrylic monomers known in the art, such as methyl acrylate, methyl methacrylate, ethyl acrylate, acrylic acid, methacrylic acid, butyl acrylate, butyl methacrylate, etc. Styrene, α-methyl styrene, or vinyl toluene may also be incorporated, particularly to increase glass transition temperature of the acrylic polymer. The acrylic polymer typically has an ICI viscosity at 200°C of 1 to 8 Pas (10 to 80 poise). For processing to form the coating powder and for film forming, the acrylic polymer should have a typical softening point of 130°C or below. Acrylic polymers useful in the invention are commercially available, e.g., the above-mentioned SCX™ acrylic resins sold by S.C. Johnson.

The adduct B) is a prereacted product of the curing agent i) and the polyester ii). That is the adduct B) is formed before it is blended with the acrylic resin A). A coating powder formed by blending an acrylic acid A), an unreacted curing agent i) and an unreacted polyester ii) does not form a coating with good impact resistance, presumably because of some degree of phase separation of the acrylic resin A) and the polyester ii).

Suitable polyepoxy compounds i) which form part of adduct B) include heterocyclic polyepoxides such as triglycidylisocyanurate (TGIC); polyepoxides of aromatic polyols such as the diglycidyl ether of bisphenol A; cycloaliphatic polyepoxides; glycidyl esters of aromatic or aliphatic polyacids, such as the diglycidyl ester of hexahydrophthalic acid; glycidyl ethers of aromatic and aliphatic polyols; low equivalent weight epoxy-functional acrylic resins; glycidyl polyamines and ether amines, and active ester-forming hydroxyalkylamides; polyepoxides of aliphatic polyols such as the diglycidyl ether of 1,4-butanediol; and polyepoxides of amino-alcohols, such as the triglycidyl ether-amine of 4-amino phenol. Other aromatic polyols which may be used to prepare glycidyl ethers include such species as bisphenol F, and tetrabromobisphenol A, and the like. Polyepoxides from this category also include low molecular weight polymers derived from the above-named aromatic diols and their diglycidyl ethers. Cycloaliphatic polyepoxides include such compounds as 3',4'-epoxycyclohexylmethyl-3,4-epoxycyclohexyl carboxylate and dicyclopentadiene dioxide and the like.

Glycidyl esters of aromatic and aliphatic polyacids include glycidyl esters of such polyacids as, for example, terephthalic acid, isophthalic acid, phthalic acid, methylterephthalic acid, trimellitic acid, pyromellitic acid, adipic acid, sebacic acid, succinic acid, maleic acid, fumaric acid, tetrahydrophthalic acid, methyltetrahydrophthalic acid, hexahydrophthalic acid, and methylhexahydrophthalic acid.

The epoxy-functional acrylates useful as curing agents i) may be produced by polymerizing epoxyfunctional acrylates, e.g., glycidyl esters of acrylic acids, alone or in conjunction with other vinyl monomers, including other acrylic esters, styrene and substituted styrenes. The use of monomers having epoxyreactive chemical groups, such as carboxylic acid and hydroxyl groups are avoided. Production, e.g. solution polymerization, of glycidyl-containing acrylic polymers of this type are described, for example, in U.S. Patent No. 4,499,239. Alternatively, an acrylic polymer having carboxylic acid functionality may be formed and epoxy-containing species subsequently grafted thereto. Glycidyl-containing acrylic polymers are also commercially available, e.g. resins sold under the Almatex trademark, PD-7690 by Anderson Development Co; and GMA-300, by Estron Chemical Co. For purposes of forming the adduct B), the epoxy-functional acrylate polymer should have a weight average molecular weight of between 300 and 2000 and epoxy equivalent weights of between 120 and 650, preferably in the range of 120 to 400.

Suitable poly(beta-hydroxy alkyl amide)s which form part of adduct B) include tetrahydroxyethyl adipamide, the major component of a commercially available composition sold as Primid ® XL-552, and similar Primid compositions.

Aliphatic polyols which may be used to prepare glycidyl ethers include, for example, ethylene glycol, propylene glycol, 1,3-butanediol, 1,4-butanediol, 1,6-hexanediol, neopentyl glycol, isopentyl glycol, trimethylolethane, trimethylolpropane, glycerol, pentaerythritol and 2,2,4-trimethylpentane-1,3-diol.

The polyester resin ii) which is used to form adduct B) may be either amorphous or semicrystalline, very preferably semicrystalline. The polyester resin may be carboxylic functional, having a carboxylic equivalent weight of between about 300 and about 3000, but may also be a polyester which has been modified to affix other functional groups, such as amino or thiol groups, by which it may be adducted to the curing agent.

Semi-crystalline polymers useful in accordance with the invention are described, for example, in International patent application WP 91/14745. Semi-crystalline polymers exhibit a heterogeneous morphology, i.e., crystalline and amorphous phases; and are typically opaque at ambient temperatures.

Specifically, a suitable semi-crystalline polyester is one with an onset of melt of between 45°C and 120°C, preferably between 55°C and 90°C, one or more T_{g} values less than 55°C, a melting point of 50°C to 200°C, preferably 60° to 130°C, an acid value of from 10 to 250 mg KOH per gram, a hydroxy number of no more than 11 mg KOH per gram and a number average molecular weight of between 600 and 20,000, preferably between 1000 and 2000. Preferably, the crystallinity of the polyester should be between 20 and 300 J/gm, preferably between 60 and 200 J/gm.

The preferred semi-crystalline polyesters useful in this invention are based on a polycondensation reaction of polyols with polycarboxylic acids or anhydrides, esters or acid chlorides based on these acids, using an excess of acid over alcohol so as to form a polyester with an acid number of at least 10, preferably from 10 to 250, and more preferably from 60 to 90, and with a hydroxyl number preferably less than 11. To provide the desired flexibility of the coating that is to be formed from the coating powder composition of the present invention, at least 90 wt%, preferably 100%, of the polyols used to form the polyester ii) are linear aliphatic diols and at least 90 wt%, preferably 100%, of the polycarboxylic acids used to form the polyester ii) are linear aliphatic dicarboxylic acids. However, minor amounts, e.g., up to 10 wt% of the polyol content and up to 10 wt% of the polycarboxylic acid content, may be other polyols and carboxylic acids, including trifunctional species and those containing cycloaliphatic, aromatic, and unsaturated groups.

Examples of suitable polyols for forming the polyester include 1,2-ethanediol, 1,3-propanediol, 1,4-butanediol, diethylene glycol, 1,6-hexanediol, neopentyl glycol, 1,10-decanediol, 1-4-cyclohexanedimethanol, trimethylolpropane, 2-methyl-1,3-propanediol, hydrogenated bisphenol A (or 2,2-(dicyclohexanol)propane), 2,2,4-trimethyl-1,3-pentanediol, 2-n-butyl-2-ethyl-1,3-propanediol, 3-hydroxy-2,2-dimethylpropyl 3-hydroxy-2,2-dimethylpropanoate (CA. Reg. No. = 115-20-4), and 1,12-dodecanediol, 2-methyl-2-hydroxymethyl-1,3-propanediol and 2-ethyl-2-hydroxymethyl-1,3-propanediol. Suitable polycarboxylic acids which may be used include succinic acid, adipic acid, azelaic acid, sebacic acid, 1,12-dodecanedioic acid, terephthalic acid, isophthalic acid, trimesic acid, tetrahydrophthalic acid, hexahydrophthalic acid, 1,4-cyclohexanedicarboxylic acid, trimellitic acid and naphthalene dicarboxylic acid.

Particularly suitable polyesters are formed from C₆-C₁₂ linear aliphatic dicarboxylic acids and diols, i.e., at least 90 wt%, preferably 100%, of the polyols being C₆-C₁₂ linear aliphatic diols and at least 90 wt%, preferably 100%, of the polycarboxylic acids being C₆-C₁₂ linear aliphatic dicarboxylic acids. One most particularly suitable polyester is a copolymer of hexanediol and 1,12-dodecanedioic acid of carboxyl equivalent weight of between 400 and 800. Such polyesters have onset of melt temperatures of about 55°C.

In addition to adduct B), additional curing agent C) is used at a curative equivalency relative to adduct B) of between 3 and 92%. Any of the curatives described above as suitable curing agents i) are suitable in non-adducted form as additional curative. Total curative functionality of adduct B) and curative C) should be at a stoichiometric equivalent of between 0.5 and 1.5 relative to the carboxylic acid functionality of the polymer. Additional curative C), is typically provided by reacting curing agent i) with polyester ii) such that when adduct B) is formed, substantial amounts of the curing agent remains unreacted with the polyester, leaving curing agent C). However, additional curative C) may be added, as required.

The coating powder may be clear, i.e., non-pigment-loaded, or may contain up to 200 wt% (200 phr) (though generally 120 wt% (120 phr) or less) of filler and/or pigment, relative to the weight of the total of the epoxy-functional polymer, the polyester and monomer curative. Filled compositions typically contain at least 10 wt% filler and/or pigment, relative to the total of epoxy-functional polymer, polyester and monomer. In addition, the coating composition may contain conventional additives, e.g., antioxidants, light stabilizers, flow modifiers, costabilizer, etc., generally at a total level of 10 phr or less.

Coating powders in accordance with the present invention are formed in a conventional manner. The components of the coating powder are combined and blended for not more than 15 minutes, to blend well. The blended materials are then extruded, e.g., at 110°C in a single screw or twin screw extruder, allowed to cool, chipped, ground and screened to obtain a powder of appropriate particle size. Average particle size is typically 20 to 80 µm. Scalping at 100 mesh is typical to remove coarse particles. There is typically about 10% by weight of particles below 10 µm. The amount of material retained on a 325 mesh is typically between 30 and 50 wt.%. The powder is then applied in a conventional manner, e.g., electrostatically, to a substrate. The substrate is heated at the time of application and/or subsequently so that the coating particles melt, form a continuous film, and cure.

The invention is surprising in several respects. As noted above, a coating powder formed from a carboxyl functional acrylic resin A), a curative i) and a polyester ii) does not provide a coating with desired physical properties, but if i) and ii) are adducted prior to forming the coating powder, a weatherable, flexible, impact resistant coating is formed. It is also surprising that best impact resistance is achieved with an acrylic resin having low carboxylic acid equivalent weight. S.C. Johnson product literature would lead one to expect highest impact resistance using acrylic resins having the highest carboxylic acid equivalent weight.

The invention will now be described in greater detail by way of specific examples.

### Examples 1-9

### REAGENTS

Morflex® 1000 - A carboxylic acid-functional poly(hexanedioyl dodecanedioate) of carboxyl equivalent weight 740 prepared in our laboratories.
Resiflow® P-67 - An acrylic flow aid, GCA Chemical Corp.
SCX™-815B A carboxylic acid-functional acrylic, S. C. Johnson, Corp.
SCX™-817C A carboxylic acid-functional acrylic, S. C. Johnson, Corp.
SCX™-819 A carboxylic acid-functional acrylic, S. C. Johnson, Corp.
TGIC - PT 810 from Ciba Geigy Corporation.
Uraflow® B - Benzoin degassing aid, GCA Chemical Corp.

Examples 1-9 were formulated as follows. To 100 parts of the combination of resins and curing agents listed in Tables 2-4 were added, in each case, the following:

| | |
|---|---|
| Resiflow® p-67 | 1.5 parts |
| Uraflow® B | 0.8 parts |
| Raven #22 Black | 2.0 parts |

Each mixture was bag blended and extruded though a twin-screw 16 mm extruder with chilling of the feed zone and heating of the front zone to 110°C. The extrudate was chilled, chipped and ground, then electrostatically coated on 0.032" (0.81 mm) thick "Q" panels of cold-rolled steel. The coated panels were cured fifteen minutes at 375°F (190°C), and allowed to air-cool to room temperature before testing. Properties were measured on panels coated to between 1.8 and 2.2 mils (45,7 µm and 55,9 µm).

### CURING AGENT/FLEXIBILIZER ADDUCTS

Morflex® 1000 a carboxylic acid-functional poly(hexanedioyl dodecanedioate) polyester and PT-810 triglycidylisocyanurate (TGIC) were combined in the amounts listed in Table 1 in an appropriately-sized mechanically-stirred glass kettle under nitrogen atmosphere, and heated over about one hour to 170°C. The molten mass was stirred 30 minutes at 170°C, then discharged into a Teflon-lined pan and allowed to cool to a waxy solid.

The ratios of epoxy and acid functional groups in the charges, the fraction of each preparation which is polyester/curing agent adduct B) and the epoxy equivalent weights of the preparation are also listed in Table 1.

**TABLE 1**

| CURING AGENT/FLEXIBILIZER ADDUCTS | | | | |
|---|---|---|---|---|
| BLEND | TGIC (GRAMS) | MORFLEX™ 1000 | EPOXY/COOH RATIO | EEW (Grams per Epoxy Equiv.) |
| A* | 209.68 | 500.00 | 3:1 | 528 |
| B* | 559.10 | 1000.00 | 4:1 | 387 |
| C* | 109.40 | 150.00 | 5.22:1 | 305 |
| D* | 167.74 | 200.00 | 6:1 | 274 |

| | | | | |
|---|---|---|---|---|
| *TGIC-polyester adduct as portion of total curative (adduct plus free TGIC (A, 0.93; B, 0.89; C, 0.82; and D, 0.77. | | | | |

**TABLE 2**

| Effect of Curing Agent Adducts on Impact Resistance of Acid-Functional Acrylics | | | |
|---|---|---|---|
| Binder Components | Example 1 | Example 2 | Example 3 |
| SCX-817C Acid-Functional Acrylic | 90.6 | 76.6 | 76.6 |
| Poly(hexanedioyl dodecanedioate) | --- | 13.5 | 13.5* |
| PT-810 TGIC | 9.4 | 9.8 | 9.8* |
| Impact Resistance (Direct/Reverse in Inch-lbs)** | 20/fail | 20/fail | 80/60 |

| | | | |
|---|---|---|---|
| * An adduct/curing agent blend was formed by heating components together at 170°C for 30 minutes, cooling and granulating before batching with the acrylic resin. | | | |
| ** 1 inch·lbs ≙ 0,113 Nm | | | |

**TABLE 3**

| Effect of Different Adduct/Curing Agent Ratios | | | | |
|---|---|---|---|---|
| Component | Example 4 | Example 5 | Example 3 | Example 6 |
| SCX-817C Acid-Functional Acrylic | 65.45 | 72.1 | 76.6 | 78.5 |
| Blend A (Adduct) | 34.55 (32.1%)* | | | |
| Blend B (Adduct) | | 27.9 (24.8%)* | | |
| Blend C (Adduct) | | | 23.4 (19.2%)* | |
| Blend D (Adduct) | | | | 21.5 (16.6%)* |
| Impact Resistance (Dir/Rev) | 80/40 | 60/20 | 80/60 | 40/fail |
| MEK Resistance (1-5**) | 4 | 4 | 4 | 4 |
| Blocking Resistance (1**-10) | 4 | 4 | 4 | --- |
| Pencil Hardness | B/F | F/H | F/H | F/2H |
| Gloss (20/60) | 35/76 | 73/87 | 71/86 | 79/90 |
| Smoothness (1 - 10**) | 6 (haze) | 7 | 7 | 7 |

| | | | | |
|---|---|---|---|---|
| * Adduct B) Fraction in Total Binder | | | | |
| ** Desired Value | | | | |

**TABLE 4**

| Effect of Different Carboxylic Acid-Functional Acrylic Equivalent Weights | | | | |
|---|---|---|---|---|
| Component | Example 7, | Example 5, | Example 8, | Example 9, |
| SCX-815B (1400 g/eq. COOH) | 78.35 | | | |
| SCX-817C (1000 g/eq. COOH) | | 72.1 | | |
| SCX-819 (750 g/eq. COOH) | | | 66.0 | 73.3 |
| Adduct B | 21.65 (19.2%)* | 27.9 (24.8%)* | 34.0 (30.3%)* | |
| Adduct D | | | | 26.7 (20.6%)* |
| Impact Resistance (Dir/Rev) | 20/fail | 60/20 | 160/160 | 160/160 |
| MEK Resistance (1-5**) | 4 | 4 | 4 | 4 |
| Blocking Resistance (1*10) | --- | 4 | --- | 6 |
| Pencil Hardness | F/H | F/H | B/F | HB/H |
| Gloss (20°/60°) | 82/90 | 73/87 | 51/75 | 83/95 |
| Smoothness (1 - 10**) | 8 | 7 | 7-8 (haz | 7-8 |

| | | | | |
|---|---|---|---|---|
| * Adduct Fraction in Total Binder | | | | |
| ** Desired Value | | | | |

## Claims

1. A coating powder composition comprising the following components (A) to (C):
A) between 60 and 90 wt%, relative to total weight of (A) plus (B) plus (C), of an acrylic polymer having a weight average molecular weight of between 1000 and 30,000, a carboxylic acid equivalent weight of from 300 to 1000 and a glass transition temperature of 45°C or above,
B) between 5 and 30 wt%, relative to total weight of (A) plus (B) plus (C), of an adduct prepared from
(i) between 20 and 50 wt%, relative to total weight of (i) plus (ii), of a polyepoxy compound or a poly(beta-hydroxyalkyl amide) compound and
(ii) between 50 and 80 wt%, relative to total weight of (i) plus (ii), of a carboxylic acid-functional polyester resin, said polyester resin being a condensation product of polyols and polycarboxylic acids, at least 90 wt% of said polyols being linear aliphatic diols and at least 90 wt% of said polycarboxylic acids being linear dicarbolxylic acids, and
C) between 2 and 30 wt%, relative of the total weight of (A) plus (B) plus (C), of a polyepoxy compound or a poly(beta-hydroxyalkyl amide) compound; the combination of said adduct (B) and curing agent (C) having un-reacted functional groups of component (i) plus curing agent (C) of a stoichiometric equivalent relative to said carboxylic acid functionality of said acrylic polymer (A) of between 0.5 and 1.5.

2. A composition according to claim 1 wherein said acrylic polymer has a carboxylic acid equivalent weight of between 500 and 1000.

3. A composition according to claim 1 or claim 2 wherein said acrylic polymer has a glass transition temperature of 60°C or above.

4. A composition according to any preceding claim wherein said curing agent (i) is selected from heterocyclic polyepoxides, glycidyl ethers of aromatic and aliphatic polyols, cycloaliphatic polyepoxides, glycidyl esters of aromatic and aliphatic polycarboxylic acids, epoxy-functional acrylic resins, glycidyl polyamines and ether amines, and active ester-forming hydroxyalkylamides.

5. A composition according to any preceding claim wherein said curing agent (i) is triglycidylisocyanurate.

6. A composition according to any preceding claim wherein said curing agent (C) is triglycidylisocyanurate.

7. A composition according to any preceding claim wherein said polyester (ii) is semicrystalline.

8. A composition according to any preceding claim wherein said polyester is a copolymer of hexanediol and 1,12-dodecanedioic acid.

9. A composition according to claim 7 or claim 8 wherein said polyester has a carboxyl equivalent weight of between 400 and 800.

10. A composition according to any preceding claim wherein said adduct (B) is present in amounts of between 5 and 25 wt% relative to the total weight of (A) plus (B) plus (C).

11. A composition according to any preceding claim wherein said curing agent (C) is present at at least 5 wt% based on total weight of (A) plus (B) plus (C).

12. A composition according to any preceding claim wherein said acrylic polymer (A) is present at at least 70 wt% based on total weight of (A) plus (B) plus (C).

## Patentansprüche

1. Beschichtungspulverzusammensetzung mit den folgenden Komponenten (A) bis (C):
A. 60 bis 90 Gew.%, bezogen auf das Gesamtgewicht von (A) + (B) + (C) eines Acrylpolymers mit einem mittleren Molekulargewicht (Gewichtsmittel) zwischen 1000 und 30 000, einem Carbonsäureäquivaentgewicht von 300 bis 1000 und einer Glasübergangstemperatur von 45 °C oder darüber,
B. 5 bis 30 Gew.%, bezogen auf das Gesamtgewicht von (A) + (B) + (C) eines Adduktes, das aus
i) 20 bis 50 Gew.%, bezogen auf das Gesamtgewicht von (i) + (ii) einer Polyepoxyverbindung oder einer Poly-(beta-hydroxyalkylamid)-Verbindung und
ii) 50 bis 80 Gew.%, bezogen auf das Gesamtgewicht von (i) + (ii) eines carbonsäurefunktionellen Polyesterharzes
hergestellt wird, wobei das Polyesterharz ein Kondensationsprodukt von Polyolen und Polycarbonsäuren ist, wenigstens 90 Gew.% dieser Polyole lineare aliphatische Diole sind und wenigstens 90 Gew.% der Polycarbonsäuren lineare Dicarbonsäuren sind, und
C. 2 bis 30 Gew.%, bezogen auf das Gesamtgewicht von (A) + (B) + (C) einer Polyepoxyverbindung oder einer Poly-(beta-hydroxyalkylamid)-Verbindung, wobei die Kombination des Adduktes (B) und des Härtungsmittels (C) un-umgesetzte funktionelle Gruppen von Komponente (i) plus Härtungsmittel (C) mit einem stöchiometrischen Äquivalent in bezug auf die Carbonsäurefunktionalität des Acrylpolymers (A) zwischen 0,5 und 1,5 hat.

2. Zusammensetzung nach Anspruch 1, bei der das Acrylpolymer ein Carbonsäureäquivalentgewicht zwischen 500 und 1000 hat.

3. Zusammensetzung nach Anspruch 1 oder 2, bei der das Acrylpolymer eine Glasübergangstemperatur von 60 °C oder darüber hat.

4. Zusammensetzung nach einem der vorausgehenden Ansprüche, bei der das Härtungsmittel (i) unter heterocyclischen Polyepoxiden, Glycidylethern von aromatischen und aliphatischen Polyolen, cycloaliphatischen Polyepoxiden, Glycidylestern von aromatischen und aliphatischen Polycarbonsäuren, epoxyfunktionellen Acrylharzen, Glycidylpolyaminen und -etheraminen sowie aktiven esterbildenden Hydroxyalkylamiden ausgewählt ist.

5. Zusammensetzung nach einem der vorausgehenden Ansprüche, worin das Härtungsmittel (i) Triglycidylisocyanurat ist.

6. Zusammensetzung nach einem der vorausgehenden Ansprüche, worin das Härtungsmittel (C) Triglycidylisocyanurat ist.

7. Zusammensetzung nach einem der vorausgehenden Ansprüche, worin der Polyester (ii) halbkristallin ist.

8. Zusammensetzung nach einem der vorausgehenden Ansprüche, worin der Polyester ein Copolymer von Hexandiol und 1,12-Docecandicarbonsäure ist.

9. Zusammensetzung nach Anspruch 7 oder 8, bei der der Polyester ein Carboxyläquivalentgewicht zwischen 400 und 800 hat.

10. Zusammensetzung nach einem der vorausgehenden Ansprüche, bei der das Addukt (B) in Mengen zwischen 5 und 25 Gew. %, bezogen auf das Gesamtgewicht von (A) + (B) + (C) vorliegt.

11. Zusammensetzung nach einem der vorausgehenden Ansprüche, bei der das Härtungsmittel (C) in einer Menge von wenigstens 5 Gew.%, bezogen auf das Gesamtgewicht von (A) + (B) + (C) vorliegt.

12. Zusammensetzung nach einem der vorausgehenden Ansprüche, bei der das Acrylpolymer (A) in einer Menge von wenigstens 70 Gew.%, bezogen auf das Gesamtgewicht von (A) + (B) + (C) vorliegt.

## Revendications

1. Une composition de poudre pour revêtement électrostatique comportant les composants (A) à (C) suivants :
A) entre 60 et 90% en poids relativement au poids total de (A) plus (B) plus (C) d'un polymère acrylique ayant une masse moléculaire moyenne en poids comprise entre 1000 et 30.000, un poids équivalent d'acide carboxylique compris entre 300 et 1000 et une température de transition vitreuse de 45°C ou supérieure,
B) entre 5 et 30% en poids relativement au poids total de (A) plus (B) plus (C) d'un additif préparé à partir de :
(i) entre 20 et 50% en poids relativement au poids total de (i) plus (ii) d'un composé polyépoxyde ou d'un composé poly(béta-hydroxyalkyl amide) et
(ii) entre 50 et 80% en poids relativement au poids total de (i) plus (ii) d'une résine de polyester carboxylique à fonction acide, ladite résine de polyester étant un produit de condensation de polyols et d'acides polycarboxyliques, au moins 90% en poids des dits polyols étant des diols aliphatiques linéaires et au moins 90% en poids des dits acides polycarboxyliques étant des acides dicarboxyliques linéaires, et
C) entre 2 et 30% en poids relativement au poids total de (A) plus (B) plus (C) d'un composé polyépoxyde ou d'un composé poly(béta-hydroxyalkyl amide) ; la combinaison du dit additif (B) et de l'agent de polymérisation (C) ayant des groupes fonctionnels non réagis du composant (i) plus un agent de polymérisation (C) d'un équivalent stoechiométrique relativement à ladite fonctionnalité acide carboxylique du dit polymère acrylique (A) compris entre 0,5 et 1,5.

2. Une composition selon la revendication 1, dans laquelle le polymère acrylique a un poids équivalent d'acide carboxylique compris entre 500 et 1000.

3. Une composition selon la revendication 1 ou la revendication 2, dans laquelle ledit polymère acrylique a une température de transition vitreuse de 60°C ou supérieure.

4. Une composition selon l'une quelconque des revendications précédentes, dans laquelle ledit agent de polymérisation (i) est sélectionné parmi les polyépoxydes hétérocycliques, les éthers glycidyliques de polyols aromatiques et aliphatiques, les polyépoxydes cycloaliphatiques, les esters glycidyliques des acides polycarboxyliques aromatiques et aliphatiques, les résines acryliques à fonction époxy, les polyamines glycidyliques et des amines d'éther, et des hydroxyalkylamides actifs formateurs d'esters.

5. Une composition selon l'une quelconque des revendications précédentes, dans laquelle ledit agent de polymérisation (i) est le triglycidylisocyanurate.

6. Une composition selon l'une quelconque des revendications précédentes, dans laquelle ledit agent de polymérisation (C) est le triglycidylisocyanurate.

7. Une composition selon l'une quelconque des revendications précédentes, dans laquelle ledit polyester (ii) est semicristallin.

8. Une composition selon l'une quelconque des revendications précédentes, dans laquelle ledit polyester est un copolymère d'hexanédiol et d'acide 1,12-dodécanédioique.

9. Une composition selon la revendication 7 ou la revendication 8, dans laquelle ledit polyester a un poids équivalent de carboxyle compris entre 400 et 800.

10. Une composition selon l'une quelconque des revendications précédentes, dans laquelle ledit additif (B) est présent en quantités comprises entre 5 et 25% en poids relativement au total de (A) plus (B) plus (C).

11. Une composition selon l'une quelconque des revendications précédentes, dans laquelle ledit agent de polymérisation (C) est présent à au moins 5% en poids sur la base du poids total de (A) plus (B) plus (C).

12. Une composition selon l'une quelconque des revendications précédentes, dans laquelle ledit polymère acrylique (A) est présent à au moins 70% en poids sur la base du poids total de (A) plus (B) plus (C).
